# EUROPÄISCHE PATENTANMELDUNG

(11) **EP 4 159 474 A1**
(43) Veröffentlichungstag der Anmeldung: **05.04.2023**
(21) Anmeldenummer: 22194672.6
(22) Anmeldetag: 08.09.2022
(51) Int. Cl.: B60B 1/00, B60B 1/04, B60B 21/06

(54) **LAUFRADKOMPONENTE FÜR EIN LAUFRAD EINES WENIGSTENS TEILWEISE MIT MUSKELKRAFT BETRIEBENEN ZWEIRADS UND LAUFRAD**

(30) Priorität: 01.10.2021 DE 102021125543
(71) Anmelder: DT Swiss AG, 2504 Biel (CH)
(72) Erfinder: Walthert, Martin, 3270 Aarberg (CH); Spahr, Stefan, 2543 Lengnau (CH); Bärtschi, Mathias, 2557 Studen BE (CH)
(74) Vertreter: BSB Patentanwälte Schütte & Engelen Partnerschaft mbB

(57) **Zusammenfassung**

Laufradkomponente (1) für ein Laufrad (100) eines wenigstens teilweise mit Muskelkraft betriebenen Zweirads (101), umfassend eine mit einer Nabe (102) mittels Speichen (103) verbindbare Felge (2), wobei die Felge (2) einen Felgenboden (12) mit einer Mehrzahl von Speichenaufnahmeabschnitten (22) mit jeweils einem Speichenloch (32) aufweist, an denen die Speichen (103) mittels Speichennippeln (104) befestigbar sind. Die Laufradkomponente (1) umfasst wenigstens eine Unterlegscheibe (3) zur Anordnung zwischen einem Speichenaufnahmeabschnitt (22) und einem Speichennippel (104). Die Unterlegscheibe (3) weist ein sich zwischen einer Oberseite (13) und einer Unterseite (23) erstreckendes Durchgangsloch (33) auf. Dabei weist der Felgenboden (12) zwei gegenüberliegende und schräg zueinander verlaufende Felgenflanken (4) auf. Die Unterlegscheibe (3) weist an ihrer Unterseite (23) wenigstens abschnittsweise eine abgeschrägte Stützflanke (5) auf. Die Unterlegscheibe (3) ist mittels ihrer Stützflanke (5) derart an den Felgenflanken (4) abstützbar, dass sie nur mit der Stützflanke (5) berührend an der Felge (2) anliegt.

## Beschreibung

Die vorliegende Erfindung betrifft eine Laufradkomponente für ein Laufrad eines wenigstens teilweise mit Muskelkraft betriebenen Zweirads und ein Verfahren zur Herstellung einer Laufradkomponente. Die Laufradkomponente umfasst wenigstens eine Felge und wenigstens eine Unterlegscheibe zur Anordnung zwischen einem Speichenaufnahmeabschnitt und einem Speichennippel.

Im Stand der Technik sind verschiedenste Laufräder von Fahrrädern bekannt geworden. Meist werden Hohlkammerfelgen eingesetzt, bei denen die Speichennippel im Hohlkammerbereich zwischen dem Felgenboden und dem Felgenbett angeordnet sind. Zur Verstärkung des Felgenbodens können Felgenösen eingesetzt werden, wie z. B. in der EP 0 715 001 B1 gezeigt.

Alternativ oder auch zusätzlich zu solchen Felgenösen werden mitunter auch lose Halteelemente für die Speichennippel im Felgenboden eingesetzt. Beispielsweise zeigt die EP 1 897 701 B1 ein Halteelement, welches in eine Durchgangsbohrung der Felge eingesetzt wird und eine spielfreie Aufnahme des Speichennippels ermöglicht.

Aus der EP 2 769 851 B1 ist eine scheibenförmige Verstärkungseinheit mit einer konvexen inneren Felgenkontaktfläche und einer konkaven äußeren Nippelkontaktfläche bekannt geworden. Durch die angepassten Kontaktflächen wird eine günstige Kraftüberleitung von dem Speichennippel über die Verstärkungseinheit auf den Felgenboden ermöglicht.

Die DE 10 2016 005 990 A1 zeigt eine Unterlegscheibe für Speichennippel aus einem rotationssymmetrischen Ringprofil, welche an die Kopfradiusanlegefläche des Speichennippels angepasst ist. Über eine bodenseitige Deckfläche der Unterlegscheibe wird die Last vom Speichennippel auf den Felgenboden im Umfangsbereich des Speichenlochs übertragen.

Demgegenüber ist es die Aufgabe der vorliegenden Erfindung, eine verbesserte Möglichkeit zur Anbindung der Speichennippel an die Felge zur Verfügung zu stellen. Dabei sollen eine hohe Stabilität und zugleich ein reduziertes Gewicht sowie eine möglichst unaufwendige Montage möglich sein.

Diese Aufgabe wird gelöst durch eine Laufradkomponente mit den Merkmalen des Anspruchs 1. Eine erfindungsgemäße Unterlegscheibe ist Gegenstand des Anspruchs 14. Ein erfindungsgemäßes Laufrad ist Gegenstand des Anspruchs 15. Bevorzugte Weiterbildungen sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Laufradkomponente ist für ein Laufrad eines wenigstens teilweise mit Muskelkraft betriebenen Zweirads, insbesondere Fahrrads vorgesehen oder bildet ein solches. Die Laufradkomponente umfasst wenigstens eine Felge, welche mittels Speichen mit einer Nabe verbindbar ist. Die Felge weist einen Felgenboden mit einer Mehrzahl von Speichenaufnahmeabschnitten mit jeweils wenigstens einem Speichenloch auf. An den Speichenaufnahmeabschnitten sind die Speichen mittels Speichennippeln befestigbar. Die Laufradkomponente umfasst wenigstens eine Unterlegscheibe zur Anordnung zwischen einem Speichenaufnahmeabschnitt und einem Speichennippel. Die Unterlegscheibe weist ein sich zwischen einer Oberseite und einer Unterseite erstreckendes Durchgangsloch auf. Die Laufradkomponente umfasst insbesondere eine Mehrzahl von Unterlegscheiben zur Anordnung zwischen jeweils einem Speichenaufnahmeabschnitt und jeweils einem Speichennippel. Dabei weist der Felgenboden zwei gegenüberliegende und schräg zueinander verlaufende Felgenflanken auf. Die Unterlegscheibe weist an ihrer Unterseite wenigstens abschnittsweise eine abgeschrägte Stützflanke auf. Dabei ist die Unterlegscheibe mittels ihrer Stützflanke derart an den Felgenflanken (lastübertragend) abstützbar, dass sie nur mit der Stützflanke berührend an der Felge anliegt. Insbesondere ist die Unterlegscheibe dazu geeignet und ausgebildet, sich ausschließlich mittels ihrer Stützflanke lastübertragend an den Felgenflanken abzustützen.

Die erfindungsgemäße Laufradkomponente bietet viele Vorteile. Einen erheblichen Vorteil bietet die abgeschrägte Stützflanke. Dadurch kann der Speichennippel gezielt auf den Felgenflanken der Felge abgestützt werden. Dadurch werden die vom Speichennippel eingeleiteten Kräfte schräg nach außen zur Felge weitergeleitet und somit vom Bereich um das Speichenloch ferngehalten. So kann beispielsweise auf Verstärkungen im Felgenboden oder auch auf Felgenösen verzichtet werden. Insgesamt ergibt sich dadurch eine verbesserte Lastverteilung, wodurch auch der Leichtbau weiter unterstützt wird. Zugleich kann die Laufradkomponente unaufwendige und wirtschaftlich montiert werden.

Die Unterseite der Unterlegscheibe weist insbesondere wenigstens einen Tragabschnitt auf. Insbesondere erstreckt sich der Tragabschnitt zwischen dem Durchgangsloch und der Stützflanke. Insbesondere ist der Tragabschnitt dadurch (in einer bestimmungsgemäßen Einbauposition) schwebend über dem Felgenboden angeordnet. Insbesondere ist der Tragabschnitt beabstandet zum Felgenboden angeordnet. Insbesondere berührt der Tragabschnitt nicht den Felgenboden.

Insbesondere spannen das Durchgangsloch und die Stützflanke den Tragabschnitt zwischen sich auf. Insbesondere umgibt der Tragabschnitt das Durchgangsloch radial. Insbesondere wird der Tragabschnitt nach radial innen durch das Durchgangsloch und nach radial außen durch die Stützflanke begrenzt. Insbesondere ist der Tragabschnitt koaxial um das Durchgangsloch angeordnet. Insbesondere ist die Stützflanke koaxial um den Tragabschnitt angeordnet. Insbesondere erstreckt sich der Tragabschnitt zwischen der Stützflanke und dem Durchgangsloch. Der Tragabschnitt ist insbesondere eben ausgebildet. Der Tragabschnitt kann auch uneben und zum Beispiel gekrümmt ausgebildet sein und/oder Erhebungen und/oder Vertiefungen aufweisen.

Insbesondere weist die Oberseite der Unterlegscheibe auch wenigstens einen Tragabschnitt auf. Vorzugsweise ist der Tragabschnitt wenigstens teilweise so ausgebildet, wie der Tragabschnitt an der Unterseite. Eine solche Ausgestaltung ist insbesondere dann vorgesehen, wenn an der Oberseite auch eine Stützflanke vorgesehen ist.

Die Stützflanke ist insbesondere sphärisch ausgebildet. Vorzugsweise ist die Stützflanke konvex gekrümmt ausgebildet. Angaben zur Krümmung der Stützflanke beziehen sich im Rahmen der vorliegenden Erfindung insbesondere auf eine Richtung, welche quer zu einer Haupterstreckungsebene der Unterlegscheibe bzw. der Stützflanke verläuft (soweit nicht anders definiert). Parallel zur Haupterstreckungsebene der Unterlegscheibe bzw. der Stützflanke folgt die Stützflanke insbesondere einer Außenkontur der Unterlegscheibe. Insbesondere ist die Haupterstreckungsebene der Stützflanke parallel zur Haupterstreckungsebene der Unterlegscheibe.

Insbesondere sind die Felgenflanken jeweils wenigstens näherungsweise korrespondierend zu den Stützflanken ausgebildet. Insbesondere sind die Radien der Krümmungen von Stützflanke und Felgenflanken aufeinander abgestimmt und vorzugsweise gleich. Insbesondere sind die Felgenflanken sphärisch und vorzugsweise konkav gekrümmt ausgebildet. Dadurch kann eine besonders gezielte Lastübertragung von der Unterlegscheibe in die Felge erfolgen. Die Stützflanke kann auch konkav gekrümmt ausgebildet sein. Dann sind die Felgenflanken vorzugsweise insbesondere jeweils konvex gekrümmt ausgebildet.

Die Stützflanke kann (quer zur Haupterstreckungsebene) auch linear bzw. ohne Krümmung ausgebildet sein. Dann sind die Felgenflanken vorzugsweise auch linear bzw. ohne Krümmung ausgebildet. Insbesondere ist (bei einer runden Unterlegscheibe) eine kegelförmige Stützflanke vorgesehen. Insbesondere sind der (Kegel-) Winkel der Stützflanke und die Winkel der Felgenflanken aufeinander abgestimmt und vorzugsweise gleich.

In allen Ausgestaltungen ist es bevorzugt, dass die Geometrien der Stützflanke und der Felgenflanken aufeinander abgestimmt sind und sich insbesondere so ergänzen, dass eine Flächenberührung entsteht. Es kann aber auch vorgesehen sein, dass sich die Geometrien der Stützflanke und der Felgenflanken so ergänzen, dass Linienberührung entsteht.

Es ist vorteilhaft und bevorzugt, dass die Stützflanke ringförmig geschlossen ausgebildet ist. Mit anderen Worten, die Stützflanke ist durchgehend ausgebildet. Insbesondere verläuft die Stützflanke um die Unterseite. Beispielsweise weist die Stützflanke einen kreisförmigen Verlauf auf. Diese Angaben beziehen sich insbesondere auf die Haupterstreckungsebene der Stützflanke.

Die Stützflanke kann auch eine offene Ringform aufweisen. Mit anderen Worten, die Stützflanke ist unterbrochen. Möglich ist auch, dass die Stützflanke wenigstens zwei Stützflankenabschnitte umfasst. Insbesondere sind die Stützflankenabschnitte dann so ausgebildet, dass die an jeweils einer Felgenflanke anliegen können. Die Stützflankenabschnitte sind insbesondere gegenüberliegend ausgebildet. Die Stützflankenabschnitte sind insbesondere dort ausgebildet, wo die Unterlegscheibe in einer bestimmungsgemäßen Einbauposition Kontakt zu der Felge aufweist.

Insbesondere sind die Stützflankenabschnitte identisch ausgebildet und beispielsweise gleich lang und oder mit gleichem Flankenwinkel und/oder mit der gleichen Krümmung ausgebildet. Die Stützflankenabschnitte sind insbesondere symmetrisch über den Umfang der Unterlegscheibe verteilt. Es können auch wenigstens drei oder mehr Stützflankenabschnitte vorgesehen sein. Diese sind dann insbesondere symmetrisch über den Umfang der Unterlegscheibe verteilt.

Es ist möglich und vorteilhaft, dass zwischen der Stützflanke und der Oberseite der Unterlegscheibe wenigstens ein umlaufender und vorzugsweise quer zu der Unterseite und/oder Oberseite verlaufender Mantelabschnitt ausgebildet ist. Insbesondere ist der Mantelabschnitt zylindrisch ausgebildet. Möglich sind auch andere Geometrien. Möglich ist auch eine Ausführung ohne einen Mantelabschnitt. Beispielsweise treffen sich zwei Stützflanken, nämlich eine von der Unterseite ausgehende Stützflanke und eine von der Oberseite ausgehende Stützflanke.

In einer vorteilhaften Weiterbildung ist an dem Mantelabschnitt wenigstens eine Positionsmarke ausgebildet. Vorzugsweise ist wenigstens eine Nase oder eine andere Art von Erhebung vorgesehen. Zusätzlich oder alternativ kann auch wenigstens eine Vertiefung vorgesehen sein. Zusätzlich oder alternativ kann auch wenigstens eine Positionsmarke an der Oberseite oder Unterseite vorgesehen sein. Eine solche Positionsmarke ermöglicht eine einfache und zugleich zuverlässige Erkennung der Ausrichtung der Unterlegscheibe relativ zur Felge. Beispielsweise dient die Positionsmarke dazu, die Position der Stützflanke anzuzeigen.

In einer bevorzugten und vorteilhaften Weiterbildung ist an der Oberseite auch wenigstens eine Stützflanke ausgebildet. Dabei ist die Stützflanke der Oberseite vorzugsweise wenigstens teilweise so ausgebildet, wie es hier zuvor für die Stützflanke der Unterseite beschrieben wurde. Die Stützflanke der Oberseite ist vorzugsweise identisch zur Stützflanke der Unterseite ausgebildet. Die Stützflanke der Oberseite kann auch unterschiedlich zur Stützflanke der Unterseite ausgebildet sein. Beispielsweise kann die Stützflanke der Oberseite für einen anderen Felgentyp vorgesehen sein. Dann kann durch ein einfaches Umdrehen der Unterlegscheibe die zur Felge passende Stützflanke ausgewählt werden.

An der Oberseite der Unterlegscheibe ist insbesondere eine Nippelaufnahme zur Aufnahme eines Auflagebereichs des Speichennippels angeordnet. Insbesondere ist eine Geometrie der Nippelaufnahme an eine Geometrie des Auflagebereichs angepasst. Insbesondere sind die Nippelaufnahme und der Auflagebereich korrespondierend zueinander ausgebildet. Insbesondere ist die Stützflanke radial weiter außen als die Nippelaufnahme angeordnet. Insbesondere umgibt die Stützflanke die Nippelaufnahme wenigstens abschnittsweise koaxial. Insbesondere umgibt die Nippelaufnahme das Durchgangsloch wenigstens abschnittsweise koaxial.

Insbesondere ist axial unterhalb der Nippelaufnahme der Tragabschnitt ausgebildet. Insbesondere sind die Nippelaufnahme und die Stützflanke in axialer Richtung nicht überlappend angeordnet. Insbesondere ist die Stützflanke nach radial außen versetzt zur Nippelaufnahme angeordnet.

Die Nippelaufnahme ist insbesondere ringförmig geschlossen ausgebildet. Insbesondere verläuft die Nippelaufnahme parallel zu einer Haupterstreckungsebene der Unterlegscheibe. Insbesondere folgt die Nippelaufnahme einer Kontur des Durchgangslochs. Insbesondere ist die Nippelaufnahme kreisförmig.

Es ist möglich und vorteilhaft, dass die Nippelaufnahme kegelförmig ausgebildet ist. Möglich und vorteilhaft ist auch, dass die Nippelaufnahme sphärisch und vorzugsweise konkav gekrümmt ausgebildet ist. Dabei beziehen sich die Angaben hier insbesondere auf eine Richtung, welche quer zu einer Haupterstreckungsebene der Unterlegscheibe verläuft. Insbesondere ist der Auflagebereich des Speichennippels korrespondierend zur Nippelaufnahme ausgebildet. Insbesondere ist der Auflagebereich sphärisch und vorzugsweise konvex gekrümmt ausgebildet. Möglich ist auch, dass die Nippelaufnahme konvex gekrümmt und der Auflagebereich des Speichennippels konkav gekrümmt ist.

In einer vorteilhaften Weiterbildung ist die Nippelaufnahme in Bezug zu einem Auflagebereich eines aufnehmbaren Speichennippels mit einer gezielten Geometrieabweichung ausgebildet. Dadurch ergibt sich insbesondere, dass der Auflagebereich des Speichennippels mit einer Linienberührung an der Nippelaufnahme aufnehmbar ist. Es kann aber auch vorgesehen sein, dass sich die Nippelaufnahme und der Auflagebereich zu einer Flächenberührung ergänzen.

Insbesondere weist die Nippelaufnahme eine Krümmung mit einem größeren Radius als eine Krümmung des Auflagebereichs des Speichennippels auf. Die Laufradkomponente kann wenigstens einen Speichennippel umfassen. Möglich ist auch, dass die Nippelaufnahme einen anderen Kegelwinkel als der Auflagebereich des Speichennippels aufweist. Möglich ist auch eine Kombination aus einer kegelförmigen Nippelaufnahme mit einem sphärischen Auflagebereich oder eine Kombination aus einer sphärischen Nippelaufnahme mit einem kegelförmigen Auflagebereich.

In allen Ausgestaltungen ist es bevorzugt und vorteilhaft, dass an der Unterseite auch wenigstens eine Nippelaufnahme ausgebildet ist. Dabei ist die Nippelaufnahme an der Unterseite vorzugsweise wenigstens teilweise so ausgebildet, wie es zuvor für die Nippelaufnahme an der Oberseite beschrieben wurde. Die Nippelaufnahme an der Unterseite ist vorzugsweise identisch zur Nippelaufnahme an der Oberseite ausgebildet. Die Nippelaufnahme an der Unterseite kann auch unterschiedlich zu Nippelaufnahme an der Oberseite ausgebildet sein. Beispielsweise kann die Nippelaufnahme an der Unterseite für einen anderen Speichennippel-Typ vorgesehen sein.

In einer besonders vorteilhaften Weiterbildung ist die Stützflanke in einem flacheren Winkel zu einer Haupterstreckungsebene der Unterlegscheibe ausgebildet als die Nippelaufnahme. Insbesondere verläuft die Stützflanke nicht parallel und insbesondere nicht rechtwinkelig zur Nippelaufnahme. Bei einer Stützflanke bzw. bei einer Nippelaufnahme mit einer Krümmung beziehen sich diese Angaben insbesondere auf eine gedachte Linie, welche sich entlang der Krümmung erstreckt. Möglich und vorteilhaft ist auch, dass eine Krümmung (quer Haupterstreckungsebene) der Stützflanke einen größeren Radius als eine Krümmung (quer Haupterstreckungsebene) der Nippelaufnahme aufweist. Diese Angaben beziehen sich insbesondere auf die Stützflanke und die Nippelaufnahme, welche im bestimmungsgemäßen Einbauzustand an der Felge bzw. am Speichennippel anliegt.

Es ist möglich und vorteilhaft, dass die Unterlegscheibe wenigstens abschnittsweise in Umfangsrichtung der Felge gekrümmt ausgebildet ist. Dadurch kann auch bei länglichen Unterlegscheiben eine gute Auflagefläche erreicht werden. Es ist möglich, dass sowohl die Oberseite als auch die Unterseite der Unterlegscheibe jeweils in Umfangsrichtung der Felge gekrümmt ausgebildet sind. Insbesondere sind die Unterseite und/oder die Oberseite wenigstens teilweise konkav ausgebildet. Insbesondere sind dann auch die Stützflanke an der Unterseite und/oder die Stützflanke an der Oberseite in Umfangsrichtung der Felge gekrümmt. Bevorzugt sind die Oberseite und/oder die Unterseite im Wesentlichen planar ausgebildet. Insbesondere folgen die Stützflanke an der Unterseite und/oder die Stützflanke an der Oberseite diesem planaren Verlauf.

In einer besonders bevorzugten und vorteilhaften Ausgestaltung ist die Unterlegscheibe in Bezug auf eine Spiegelebene symmetrisch ausgebildet, welche parallel zu einer Haupterstreckungsebene der Unterlegscheibe ist oder welche der Haupterstreckungsebene entspricht. Dann sind beispielsweise die Oberseite und die Unterseite identisch ausgebildet.

Beispielsweise sind dann die Stützfläche und die Nippelaufnahme an der Unterseite identisch zu denen an der Oberseite.

In einer ebenfalls bevorzugten und vorteilhaften Weiterbildung ist die Unterlegscheibe in Bezug auf eine Spiegelebene symmetrisch ausgebildet, welche rechtwinklig zu einer Haupterstreckungsebene der Unterlegscheibe ist. Insbesondere ist die Unterlegscheibe in Bezug auf eine Spiegelebene symmetrisch ausgebildet, welche parallel zu einer Längsachse des Durchgangslochs ist oder welche sich mit der Längsachse des Durchgangslochs überdeckt. Beispielsweise ist die Unterlegscheibe dann kreisförmig ausgebildet. Möglich ist aber auch, dass die Unterlegscheibe dazu oval und insbesondere elliptisch ausgebildet ist. Die Unterlegscheibe kann auch mehreckig und insbesondere rechteckig (vorzugsweise mit abgerundeten Ecken) ausgebildet sein. Insbesondere kann die Unterlegscheibe länglich ausgebildet sein.

In allen Ausgestaltungen ist es besonders bevorzugt, dass die Unterlegscheibe (im Wesentlichen) rotationssymmetrisch ausgebildet ist. Eine solche Ausgestaltung bietet viele Vorteile sowohl bei der Herstellung der Unterlegscheibe als auch bei der Montage des Laufrads. Die Unterlegscheibe weist dann insbesondere eine (wenigstens näherungsweise) zylindrische Grundgeometrie auf. Von dieser Grundgeometrie kann dann die tatsächliche Geometrie der Unterlegscheibe abgeleitet werden (beispielsweise durch Ergänzen der Stützflächen und des Durchgangslochs und der Nippelaufnahmen). Die Unterlegscheibe kann auch eine gestreckte Grundgeometrie aufweisen. Eine solche beispielsweise ist die Unterlegscheibe oval und insbesondere elliptisch oder auch linsenförmig (auch als Schiffchen bezeichnet) ausgebildet.

Die Laufradkomponente kann wenigstens einen Speichennippel und/oder wenigstens eine Speiche und/oder wenigstens eine Nabe umfassen.

Vorzugsweise weist die Unterlegscheibe einen (insbesondere einteiligen) Grundkörper auf. Auf dem Grundkörper ist insbesondere wenigstens abschnittsweise wenigstens eine Beschichtung aufgebracht. Der Grundkörper ist vorzugsweise vollflächig beschichtet. Die Beschichtung (oder wenigstens eine Schicht der Beschichtung umfasst insbesondere wenigstens eine Gleitschicht.

Eine Gleitschicht kann insbesondere aus z. B. einem Trockengleitlack bestehen oder einen solchen umfassen.

Die erfindungsgemäße Unterlegscheibe ist für eine Laufradkomponente vorgesehen, wie sie zuvor beschrieben wurde. Insbesondere ist die Unterlegscheibe so ausgebildet, wie es zuvor für die Unterlegscheibe der Laufradkomponente beschrieben wurde. Die Anmelderin behält sich vor, die Verwendung einer Unterlegscheibe für eine Laufradkomponente zu beanspruchen.

Die Anmelderin behält sich vor ein anmeldungsgemäßes Verfahren zu beanspruchen, welches zur Herstellung einer Laufradkomponente für ein (Laufrad eines) wenigstens teilweise mit Muskelkraft betriebenes Zweirad dient. Dabei wird ein Rohmaterial zur Herstellung wenigstens einer Unterlegscheibe bereitgestellt. Aus dem Rohmaterial wird (wenigstens) ein Rohkörper ausgestanzt. Der Rohkörper wird durch wenigstens einen Prozessschritt zu einem Grundkörper umgeformt. Es wird wenigstens eine (Schicht einer) Beschichtung auf den Grundkörper aufgebracht. Die Beschichtung umfasst wenigstens eine Gleitschicht.

Das anmeldungsgemäße Verfahren ist sehr vorteilhaft und stellt eine vorteilhafte Laufradkomponente zur Verfügung. Insbesondere können vorteilhafte Unterlegscheiben hergestellt werden, die einen präzisen Aufbau eines Laufrades ermöglichen. Durch die Gleitschicht kann die Genauigkeit der Herstellung verbessert werden, da eine genauer definierte Speichenspannung reproduzierbarer aufgebracht werden kann. Das Reibmoment bei der Montage wird verringert.

Vorzugsweise wird wenigstens ein (wasserbasierter) Gleitlack aufgetragen bzw. umfasst wenigstens eine Beschichtung (bzw. eine Gleitschicht) einen (wasserbasierten) Gleitlack.

Das Beschichtungsmaterial für die Beschichtung bzw. die Gleitschicht enthält insbesondere wenigstens PTFE und/oder wenigstens einen Zusatz und insbesondere einen UV-Zusatz.

Vorzugsweise wird für das Auftragen der Beschichtung das flüssige Beschichtungsmaterial (und insbesondere der Gleitlack) in einem Tauchbehälter bereitgestellt. Vorzugsweise wird ein Aufnahmeträger oder ein Behälter in Form z. B. eines Korbs (wie z. B. Siebkorb) mit wenigstens einem Grundkörper in den Tauchbehälter eingetaucht. Der Aufnahmeträger dient insbesondere zur Aufnahme einer Vielzahl von Grundkörpern zur gleichzeitigen Auftragung von Beschichtungsmaterial.

Es ist vorteilhaft, wenn nach dem Eintauchen der Aufnahmeträger (bzw. der Korb) außer Kontakt mit dem flüssigen Beschichtungsmaterial (und insbesondere dem Gleitlack) gebracht wird. Das kann durch Anheben des Aufnahmeträgers, durch Absenken des Tauchbehälters, durch (temporäres) Ablassen oder Absaugen des flüssigen Beschichtungsmaterials oder dergleichen erfolgen. Der Aufnahmeträger wird dann rotiert, um überschüssiges Beschichtungsmaterial (den Gleitlack) abzuschleudern.

Vorzugsweise wird das Beschichtungsmaterial (und insbesondere der Gleitlack durch Lufttrocknung) ausgehärtet.

Der beschriebene Beschichtungsprozess kann zweifach oder auch mehrfach wiederholt werden. Dabei können auch unterschiedliche Beschichtungsmaterialien vollflächig oder auf Teilen der Oberfläche aufgebracht werden. Insbesondere wird wenigstens ein Beschichtungsmaterial auf der Kontaktfläche bzw. den möglichen bzw. den möglichen Kontaktflächen der Unterlegscheibe mit den Speichen aufgebracht.

Besonders bevorzugt ist wenigstens ein Prozessschritt aus einer Gruppe von Prozessschritten entnommen, welche Stanz-, Präge-, Biege-, Tiefzieh-, Gleitschleif-, Kantenverrundungs-, Entgratungs- und Reinigungs- und Entfettungsvorgänge umfasst. Auch weitere Prozessschritte oder Bearbeitungsvorgänge sind möglich.

Vorzugsweise wird Rohmaterial in Blechform und vorzugsweise auf Rollen zur Verfügung gestellt.

Die Herstellung des Rohkörpers erfolgt insbesondere durch progressives Stanzen. Das kann mehrere Prozessschritte beinhalten, wie Stanz- und/oder Schneidvorgänge und auch andere Formgebungstechniken. Vorzugsweise werden die Bauteile durch ein Gleitschleifen bearbeitet, um Kanten zu verrunden und den Rohkörper zu entgraten. Insbesondere wird der so entstandene Grundkörper gereinigt und/oder entfettet.

Die Beschichtung bzw. Auftragung wenigstens einer Gleitschicht erfolgt, indem zunächst wenigstens ein Trockengleitlack auf das Bauteil durch Tauchzentrifugieren aufgebracht wird. Dazu wird insbesondere ein wasserbasierter Gleitlack mit wenigstens einem PTFE- und/oder UV-Zusatz in einem Tauchbehälter bereitgestellt.

Es wird ein Aufnahmeträger wie ein Siebkorb mit Bauteilen bzw. den zu beschichtenden Rohkörpern oder Grundkörper (wenigstens teilweise) gefüllt. Der Aufnahmeträger wird in den Tauchbehälter getaucht. Das Beschichtungsmedium in dem Tauchbehälter kann abgelassen werden.

Der insbesondere als Siebkorb ausgebildete Aufnahmeträger wird rotiert, um Überschuss von den Bauteilen abzuschleudern. Eine Aushärtung des Gleitlackes kann insbesondere durch Lufttrocknung erfolgen. Schließlich wird der Siebkorb geleert. Bei Bedarf kann ein mehrfacher Auftrag an Gleitbeschichtung erfolgen und der Beschichtungprozess kann (mehrfach) wiederholt werden.

Grundsätzlich kann ein anmeldungsgemäßes Verfahren auch zur Herstellung nicht nur von Laufradkomponenten für ein (Laufrad eines) wenigstens teilweise mit Muskelkraft betriebenes Zweirades dienen, sondern auch zur Herstellung anderer Fahrradkomponenten. Z. B. können auch Felgenösen oder andere Fahrradkomponenten entsprechend hergestellt werden. Dabei wird ein Rohmaterial zur Herstellung wenigstens einer Bauteils bereitgestellt. Aus dem Rohmaterial wird (wenigstens) ein Rohkörper gebildet und insbesondere ausgestanzt. Der Rohkörper wird durch wenigstens einen Prozessschritt zu einem Grundkörper umgeformt. Es wird wenigstens eine (Schicht einer) Beschichtung auf den Grundkörper aufgebracht. Die Beschichtung umfasst insbesondere wenigstens eine Gleitschicht. Die Anmelderin behält sich vor, auch ein solches Verfahren für andere Fahrradkomponenten zu beanspruchen. In Weiterbildungen können weitere Schritte in angepasster Weise, wie zuvor beschrieben, eingesetzt werden.

Das erfindungsgemäße Laufrad umfasst insbesondere wenigstens eine Laufradkomponente, wie sie zuvor beschrieben wurde. Insbesondere umfasst das Laufrad eine Felge und eine Nabe und eine Mehrzahl von Speichennippeln und Speichen und Unterlegscheiben. Auch das erfindungsgemäße Laufrad löst die zuvor gestellte Aufgabe besonders vorteilhaft. Das Laufrad ist insbesondere für ein wenigstens teilweise mit Muskelkraft betriebenes Zweirad und vorzugsweise Fahrrad vorgesehen.

Im Rahmen der vorliegenden Erfindung kann der Begriff "schräg" insbesondere synonym mit "winkelig" verwendet werden. Die Felgenflanken sind insbesondere winkelig zueinander angeordnet. Insbesondere verlaufen die Felgenflanken nicht parallel und insbesondere nicht rechtwinkelig zueinander. Insbesondere sind die Felgenflanken schräg zu einer axialen Achse der Felge und insbesondere schräg zu einer radialen Ebene der Felge angeordnet. Insbesondere sind die Felgenflanken jeweils gekrümmt ausgebildet. Möglich ist aber auch, dass die Felgenflanken plan bzw. eben ausgebildet sind.

Die Stützflanke kann auch als Fase bezeichnet werden. Insbesondere ist die Stützflanke in der Art einer Fase ausgebildet. Insbesondere stellt die Stützflanke eine abgeschrägte Werkstoffkante der Unterlegscheibe dar. Insbesondere verläuft die Stützflanke schräg zur Längsachse des Durchgangslochs. Insbesondere verläuft die Stützflanke schräg zu einer Haupterstreckungsebene der Unterlegscheibe. Insbesondere verläuft die Stützflanke nicht parallel und insbesondere nicht rechtwinkelig zu einer Haupterstreckungsebene der Unterlegscheibe. Vorzugsweise ist die Stützflanke an die Felgenflanken angepasst. Insbesondere korrespondiert die Schräge der Stützflanke mit den Schrägen der Felgenflanken.

Die Speichenaufnahmeabschnitte umfassen jeweils wenigstens ein Speichenloch zur Durchführung jeweils wenigstens einer Speiche und/oder jeweils eines Speichennippels. Die Unterlegscheibe umfasst insbesondere ein Durchgangsloch zur Durchführung eines Speichennippels und/oder einer Speiche. Insbesondere sind die Speichenlöcher zwischen den Felgenflanken angeordnet. Insbesondere sind die Speichenlöcher dort angeordnet, wo die beiden Felgenflanken beginnen oder aufeinandertreffen.

Insbesondere ist die Unterlegscheibe mit wenigstens einer Stützflanke und vorzugsweise mit wenigstens zwei Stützflanken ausgestattet. Insbesondere ist wenigstens eine Stützflanke an der Unterseite ausgebildet. Insbesondere ist wenigstens eine Stützflanke an der Oberseite ausgebildet.

Die Unterlegscheibe ist insbesondere mit wenigstens einer Nippelaufnahme und vorzugsweise mit wenigstens zwei Nippelaufnahmen ausgestattet. Insbesondere ist wenigstens eine Nippelaufnahme an der Unterseite vorgesehen. Insbesondere ist wenigstens eine Nippelaufnahme an der Oberseite vorgesehen.

In einem bestimmungsgemäß montierten Laufrad ist die Stützflanke radial weiter außen als der Auflagebereich des Speichennippels angeordnet. Insbesondere erfolgt die Lastübertragung von der Unterlegscheibe in die Felge radial weiter außen als die Lastübertragung von dem Speichennippel in die Unterlegscheibe. Insbesondere erfolgt unterhalb des Auflagebereichs des Speichennippels keine Lastübertragung von der Unterlegscheibe in die Felge. Insbesondere ist unterhalb des Auflagebereichs des Speichennippels der Tragabschnitt angeordnet. Vorzugsweise sind die Stützflanke und der Auflagebereich des Speichennippels in axialer Richtung nicht überlappend angeordnet. Mit anderen Worten, die Stützflanke ist in axialer Richtung nicht direkt unterhalb des Auflagebereichs des Speichennippels angeordnet. Insbesondere befindet sich der Tragabschnitt in axialer Richtung direkt unterhalb des Auflagebereichs des Speichennippels.

Insbesondere erstreckt sich der Tragabschnitt zwischen der Nippelaufnahme und der Stützflanke. Insbesondere verläuft die Stützflanke winkelig zum Tragabschnitt. Insbesondere verläuft der Tragabschnitt parallel zur Haupterstreckungsebene der Unterlegscheibe. Insbesondere ist der Stützabschnitt durch den Tragabschnitt vom Durchgangsloch beabstandet. Insbesondere verläuft eine Kraftrichtung der Lastübertragung von der Unterlegscheibe in die Felge schräg zur Längsachse des Durchgangslochs und insbesondere auch schräg zur Haupterstreckungsebene der Felge.

Weitere Vorteile und Merkmale der vorliegenden Erfindung ergeben sich aus der Beschreibung der Ausführungsbeispiele, welche mit Bezug auf die beiliegenden Figuren im Folgenden erläutert werden.

In den Figuren zeigen:
- Fig. 1: eine stark schematische Darstellung eines Fahrrads mit einer anmeldungsgemäßen Laufradkomponente;
- Fig. 2: eine schematische Detaildarstellung einer anmeldungsgemäßen Laufradkomponente in einer quer geschnittenen Ansicht;
- Fig. 3: eine schematische Darstellung einer Unterlegscheibe einer anmeldungsgemäßen Laufradkomponente in einer perspektivischen Ansicht;
- Fig. 4: die Unterlegscheibe der Fig. 3 in einer geschnittenen Seitenansicht;
- Fig. 5: eine weitere schematische Detaildarstellung einer anmeldungsgemäßen Laufradkomponente in einer quer geschnittenen Ansicht;
- Fig. 6: eine schematische Querschnittsdarstellung einer anmeldungsgemäßen Laufradkomponente mit einer Beschichtung;
- Fig. 7: eine rein schematische Darstellung einer Unterlegscheibe einer anmeldungsgemäßen Laufradkomponente in einer Draufsicht; und
- Fig. 8: eine rein schematische Darstellung einer anderen Unterlegscheibe einer anmeldungsgemäßen Laufradkomponente in einer Draufsicht.

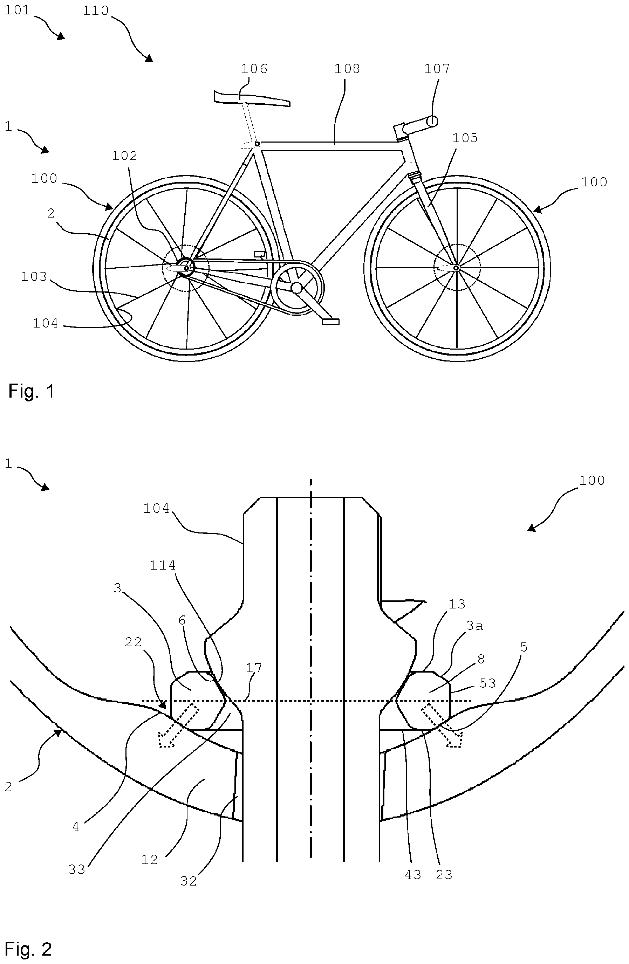

Die Figur 1 zeigt eine schematische Darstellung eines wenigstens teilweise muskelbetriebenen Zweirads 101, welches hier als Fahrrad 110 ausgebildet ist. Das Zweirad 101 weist zwei Laufräder 100 auf, nämlich ein Vorderrad und ein Hinterrad, welche jeweils mit erfindungsgemäßen Laufradkomponenten 1 ausgestattet sind. Weiterhin sind ein Rahmen 108, eine Gabel 105, ein Lenker 107 und ein Sattel 106 vorgesehen. Als Antrieb sind Pedalen und hier eine Kettenschaltung vorgesehen. Der Antrieb kann z. B. auch eine elektrische Unterstützung umfassen. Das Vorderrad und das Hinterrad sind jeweils an Ausfallenden an der Gabel 105 bzw. dem Rahmen 108 befestigt.

Die Laufräder 100 weisen jeweils eine Felge 2 und eine Nabe 102 sowie Speichen 103 und Speichennippel 104 auf. Die Speichen 103 verbinden die Felge 2 mit der Nabe 102. Die Speichen 1 sind aufgrund des Abbildungsmaßstabs hier nur schematisch dargestellt. Neben der Felge 2 umfasst die Laufradkomponente 1 hier noch jeweils eine Unterlegscheibe 3 für die Speichennippel 104. Die Unterlegscheiben 3 sind hier nicht sichtbar und werden mit Bezug zu den nachfolgenden Figuren näher beschrieben.

Die Figur 2 zeigt eine Detaildarstellung eines Laufrades 100 mit einer erfindungsgemäßen Laufradkomponente 1. Die Felge 2 umfasst hier einen Felgenboden 12 mit einer Mehrzahl von Speichenaufnahmeabschnitten 22 mit jeweils einem Speichenloch 32. Durch das Speichenloch 32 erstreckt sich der Speichennippel 104 und eine hier nicht dargestellte Speiche 103. Der Felgenboden 12 ist hier mit zwei gegenüberliegenden und schräg zueinander verlaufenden Felgenflanken 4 ausgestattet.

In den Speichenaufnahmeabschnitten 22 ist das Laufrad 100 mit Unterlegscheiben 3 ausgestattet. Dabei sind die Unterlegscheiben 3 zwischen den Speichenaufnahmeabschnitten 22 und den Speichennippeln 104 angeordnet. An einer Oberseite 13 der Unterlegscheibe 3 ist eine Nippelaufnahme 6 ausgebildet. Korrespondierend dazu weist der Speichennippel 104 einen Auflagebereich 114 auf, sodass der Speichennippel 104 lastübertragend auf der bzw. einer Unterlegscheibe 3 abgestützt ist.

Die Unterlegscheibe 3 verfügt über einen Grundkörper 8. Der Grundkörper besteht vorzugsweise aus Metall und kann z. B. aus stahl bestehen. Auf der äußeren Oberfläche des Grundkörpers 8 kann eine Beschichtung 3a aufgebracht sein. Die Beschichtung 3a kann ein Gleitlack sein, der die Gleitfähigkeit verbessert. Insbesondere wird dadurch das Drehen des Speichennippels 104 an der Auflagefläche an der Nippelaufnahme 6 bei der Montage verbessert. Dadurch kann eine verbesserte Montage des Laufrades 100 erfolgen. Die Speichenspannung kann reproduzierbarer eingestellt werden.

Die Unterlegscheibe 3 ist mit einem Durchgangsloch 33 ausgestattet, welches sich zwischen der Oberseite 13 und der Unterseite 23 erstreckt. Die Längsachse des Durchgangslochs 33 (strichpunktierte Linie) verläuft hier rechtwinklig zu einer Haupterstreckungsebene 17 der Unterlegscheibe 3.

Die Unterlegscheibe 3 ist hier auch an der Unterseite 23 mit einer Nippelaufnahme 6 ausgestattet. Dadurch ist es bei der Montage egal, welche der Seiten 13, 23 dem Speichennippel 104 zugewandt ist.

An ihrer Unterseite 23 weist die Unterlegscheibe 3 eine abgeschrägte Stützflanke 5 auf. Die Stützflanke 5 ist korrespondierend zu den Felgenflanken 4 ausgebildet. Dadurch stützt sich die Unterlegscheibe 3 nur über die Stützflanke 5 lastübertragend auf der Felge 2 ab. Zur Veranschaulichung der Lastübertragung sind hier 2 gestrichelte Pfeile eingezeichnet. Hier ist gut zu erkennen, dass die Felgenflanken 4 eine konkave Krümmung aufweisen. Korrespondierend dazu ist die Stützflanke 5 mit einer konvexen Krümmung ausgeführt.

Die Unterlegscheibe 3 berührt die Felge 2 hier ausschließlich mit ihrer Stützflanke 5. Wie hier gut zu erkennen ist, liegt die Stützflanke 5 dabei weiter radial außen als die Nippelaufnahme 6 und der Auflagebereich 114 des Speichennippels 104. Dadurch wird die auf den Speichennippel 104 einwirkende Kraft nicht einfach nach unten, sondern schräg nach außen weitergeleitet. So werden die Kräfte weiter entfernt vom Speichenloch 32 in die Felge 2 eingeleitet. Das ist auch deswegen vorteilhaft, da der Felgenboden 12 im Bereich des Speichenlochs 32 aufgrund der Bohrung oft entsprechend geschwächt ist. Die hier gezeigte Unterlegscheibe 3 bietet insgesamt eine erheblich Last Einleitung in die Felge 2. Durch die hier gezeigte Unterlegscheibe 3 mit ihren Stützflanken 5 werden die Kräfte in entsprechender Entfernung vom Speichenloch 32 an die Felge 2 weitergegeben.

Die Unterlegscheibe 3 ist an ihrer Unterseite 23 mit einem frei über dem Felgenboden 12 schwebenden Tragabschnitt 43 ausgestattet. Der Tragabschnitt 43 erstreckt sich zwischen dem Durchgangsloch 33 und der Stützflanke 5. Dadurch ist die Unterseite 23 hier zu einem großen Teil berührungslos zum Felgenboden 12 ausgebildet. Das bietet Vorteile beispielsweise gegenüber solchen Typen von Unterlegscheiben, welche die Kräfte über eine großflächig oder sogar vollflächig anliegende Unterseite direkt in den Felgenboden 12 weitergeben.

Die hier gezeigte Unterlegscheibe 3 ist auch an ihrer Oberseite 13 mit einer Stützflanke 5 ausgestattet. Dabei ist die Stützflanke 5 an der Oberseite identisch zu der Stützflanke 5 an der Unterseite 23 ausgebildet. Dadurch spielt es bei der Montage keine Rolle, mit welcher Seite 13, 23 die Unterlegscheibe auf die Felge 2 gelegt wird.

Beispielsweise ist die hier gezeigte Unterlegscheibe 3 rotationssymmetrisch ausgebildet. Die Grundgeometrie ist zylindrisch. Dabei sind sowohl die Stützflanken 5 als auch die Nippelaufnahmen 6 ringförmig geschlossen und kreisförmig ausgebildet. Zwischen der Stützflanke 5 der Unterseite 23 und der Stützflanke 5 der Oberseite 13 ist ein zylindrischer Mantelabschnitt 53 ausgebildet.

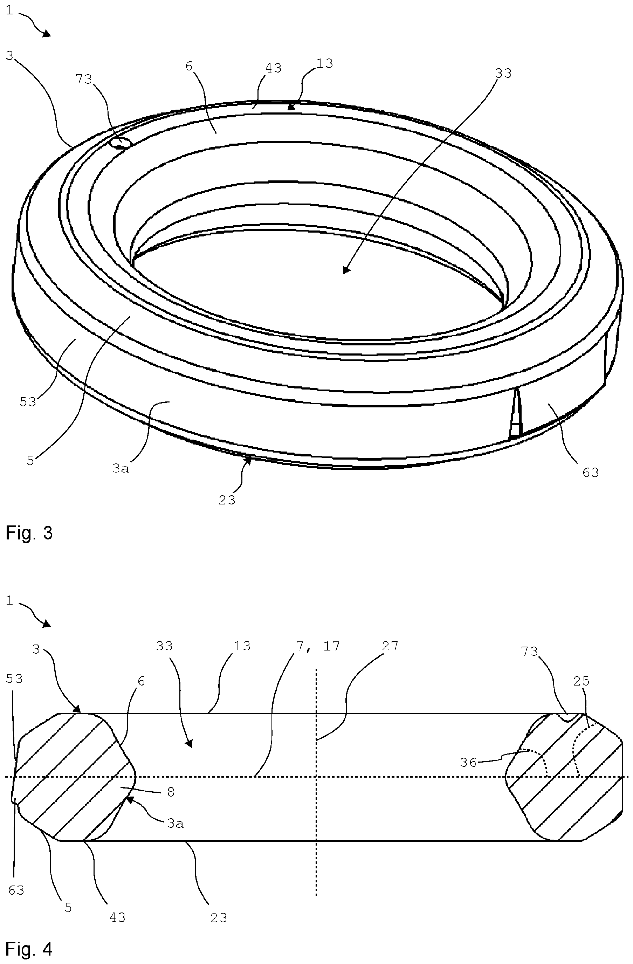

In der Figur 3 ist eine Unterlegscheibe 3 gezeigt, wie sie beispielsweise zuvor mit Bezug zur Figur 2 beschrieben wurde. In der hier gezeigten Ausführung ist die Unterlegscheibe 3 mit einer Positionsmarke 63 ausgestattet. Die Positionsmarke 63 ist hier als Nase ausgebildet und befindet sich an dem Mantelabschnitt 53.

Die Nippelaufnahme 6 oder die gesamte Oberfläche der Unterlegscheibe 3 kann wenigstens eine Beschichtung in Form einer Gleitschicht 3a aufweisen. Das reduziert die Gleitreibung bei der Montage des Laufrades 100.

Zur einfachen und zügigen Erkennung der Ausrichtung ist die Unterlegscheibe 3 hier an ihrem Mantelabschnitt 53 mit einer Positionsmarke 63 ausgebildet. Die Positionsmarke 63 ist beispielsweise als eine Nase ausgebildet.

Zur besseren Unterscheidung zwischen Oberseite 13 und Unterseite 23 ist hier auch im Tragabschnitt 43 der Oberseite 13 eine Positionsmarke 73 angeordnet. Die Positionsmarke 73 ist hier beispielsweise eine rundliche Vertiefung.

Die Positionsmarken 63, 73 ermöglichen eine zuverlässige Überprüfung der Ausrichtung. Das ist beispielsweise dann von Vorteil, wenn die Unterlegscheibe nach einem Ausbau wieder in der gleichen oder in einer gezielt anderen Ausrichtung eingebaut werden soll. Zudem kann durch die Positionsmarken 63, 73 auch erkannt werden, ob sich die Unterlegscheibe 3 um ihre Längsachse gedreht hat, z. B. aufgrund von zu geringer Spannung der Speichen 103.

Die Figur 4 zeigt eine geschnittene Seitenansicht der zuvor beschriebenen Unterlegscheibe 3. Hier ist gut zu erkennen, dass die Unterlegscheibe 3 in Bezug auf eine Spiegelebene 7 symmetrisch ausgebildet ist, welche der Haupterstreckungsebene 17 entspricht. Gut zu erkennen ist auch, dass die Unterlegscheibe in Bezug auf eine Spiegelebene 27 symmetrisch ausgebildet ist, welche rechtwinklig zur Haupterstreckungsebene 17 verläuft.

Die Stützflanken 5 sind hier flacher als die Nippelaufnahmen 6 ausgebildet sind.

Die Stützflanken 5 sind hier in einem definierten Winkel 25 zur Haupterstreckungsebene 17 abgeschrägt. Auch die Nippelaufnahmen 6 sind in einem definierten Winkel zur Haupterstreckungsebene 7 abgeschrägt. Dabei ist hier gut zu erkennen, dass die Stützflanken 5 in einem flacheren Winkel 25 als die Nippelaufnahmen verlaufen.

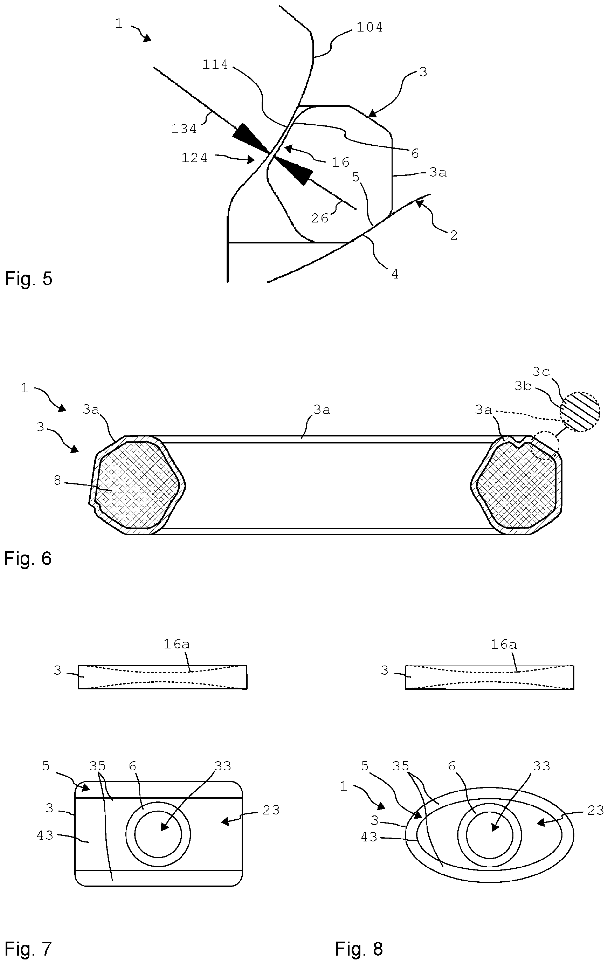

Die Figur 5 zeigt eine Ausgestaltung der mit Bezug zur Figur 2 beschriebenen Laufradkomponente 1. Dabei wurde die Nippelaufnahme 6 hier mit einer Krümmung 16 ausgebildet, welche einen größeren Radius 26 als eine Krümmung 124 des Auflagebereichs 114 des Speichennippels 104 aufweist. Dadurch kommt es hier zu einer linienförmigen Auflage des Speichennippels 104 auf der Unterlegscheibe 3.

Figur 6 zeigt einen schematischen Querschnitt durch die Unterlegscheibe 3 nach Figur 4, wobei hier stark vergrößert die auf den Grundkörper 8 aufgetragene Beschichtung 3a zu erkennen ist. Es sei darauf hingewiesen, dass insbesondere die Dicke der Beschichtung 3a nicht maßstäblich eingezeichnet ist. Grundsätzlich ist die Schicht so dünn, dass sie maßstäblich eingezeichnet nur ein dünner Strich wäre. Die Beschichtung 3a ist hier vollflächig auf einem Großteil der Oberfläche oder der gesamten Oberfläche der Unterlegscheibe 3 aufgetragen. Insbesondere ist die Beschichtung 3a auf der Kontaktfläche zu den Speichennippeln 104 aufgetragen. Bei Bedarf können mehrere Schichten 3a, 3b, 3c der Beschichtung nacheinander bzw. übereinander aufgetragen sein, wie das schematisch vergrößerte Detail in Figur 6 rechts zeigt.

In der Figur 7 ist eine Unterlegscheibe 3 gezeigt, wie sie z. B. zuvor mit Bezug zur Figur 2 beschrieben wurde. Hier weist die Unterlegscheibe 3 eine rechteckige Grundgeometrie auf. Die Stützflanke 5 wird hier durch zwei Stützflankenabschnitte 35 bereitgestellt. Die Stützflankenabschnitte 35 verlaufen an den Längsseiten der Unterseite 23. Die hier nicht sichtbare Oberseite 13 ist ebenso wie die Unterseite 23 mit zwei Stützflankenabschnitten 35 ausgebildet. Alternativ kann aber auch eine ringförmig geschlossene Stützflanke 5 vorgesehen sein.

Die Unterlegscheibe 3 ist in Bezug auf eine Spiegelebene 7 symmetrisch ausgebildet, welche der Haupterstreckungsebene 17 entspricht. Die Oberseite 13 ist somit identisch zur Unterseite 23 ausgebildet. Zudem ist die Unterlegscheibe 3 in Bezug auf eine Spiegelebene 27 symmetrisch ausgebildet, welche rechtwinklig zur Haupterstreckungsebene 17 verläuft. Es kann vorgesehen sein, dass die Unterlegscheibe 3 in ihre Längsrichtung (bzw. in Umfangsrichtung der Felge 2) gekrümmt ausgebildet ist. Beispielsweise sind die Oberseite 13 und die Unterseite 23 jeweils in ihre Längsrichtung konkav gekrümmt.

Die Figur 8 zeigt die Unterlegscheibe 3 der Figur 7 mit einer anderen Grundgeometrie. In der hier gezeigten Ausführung weist die Unterlegscheibe 3 eine elliptische Grundgeometrie auf. In Figuren 7 und 8 ist jeweils oben auch noch eine Seitenansicht der Unterlegscheiben abgebildet, wobei gestrichelt (nicht maßstäblich dargestellte) Varianten abgebildet sind, bei denen die Unterlegscheiben in Umfangsrichtung der Felge gekrümmt (Krümmung 16a) sind, um sich an die Felge in Umfangsrichtung anzulegen.

**Bezugszeichenliste:**

| | | | |
|---|---|---|---|
| 1 | Laufradkomponente | 33 | Durchgangsloch |
| 2 | Felge | 35 | Stützflankenabschnitt |
| 3 | Unterlegscheibe | 36 | Winkel |
| 3a | Beschichtung | 43 | Tragabschnitt |
| 3b | Beschichtung | 53 | Mantelabschnitt |
| 3c | Beschichtung | 63 | Positionsmarke |
| 4 | Felgenflanke | 73 | Positionsmarke |
| 5 | Stützflanke | 100 | Laufrad |
| 6 | Nippelaufnahme | 101 | Zweirad |
| 7 | Spiegelebene | 102 | Nabe |
| 8 | Grundkörper | 103 | Speiche |
| 12 | Felgenboden | 104 | Speichennippel |
| 13 | Oberseite | 105 | Gabel |
| 16 | Krümmung | 106 | Sattel |
| 16a | Krümmung | 107 | Lenker |
| 17 | Haupterstreckungsebene | 108 | Rahmen |
| 22 | Speichenaufnahmeabschnitt | 110 | Fahrrad |
| 23 | Unterseite | 114 | Auflagebereich |
| 25 | Winkel | 124 | Krümmung |
| 26 | Radius | 134 | Radius |
| 27 | Spiegelebene | | |
| 32 | Speichenloch | | |

## Patentansprüche

1. Laufradkomponente (1) für ein Laufrad (100) eines wenigstens teilweise mit Muskelkraft betriebenen Zweirads (101), umfassend wenigstens eine mit einer Nabe (102) mittels Speichen (103) verbindbare Felge (2), wobei die Felge (2) einen Felgenboden (12) mit einer Mehrzahl von Speichenaufnahmeabschnitten (22) mit jeweils einem Speichenloch (32) aufweist, an denen die Speichen (103) mittels Speichennippeln (104) befestigbar sind und umfassend wenigstens eine Unterlegscheibe (3) zur Anordnung zwischen einem Speichenaufnahmeabschnitt (22) und einem Speichennippel (104), wobei die Unterlegscheibe (3) ein sich zwischen einer Oberseite (13) und einer Unterseite (23) erstreckendes Durchgangsloch (33) aufweist,
**dadurch gekennzeichnet,**
**dass** der Felgenboden (12) zwei gegenüberliegende und schräg zueinander verlaufende Felgenflanken (4) aufweist und dass die Unterlegscheibe (3) an ihrer Unterseite (23) wenigstens abschnittsweise eine abgeschrägte Stützflanke (5) aufweist und dass die Unterlegscheibe (3) mittels ihrer Stützflanke (5) derart an den Felgenflanken (4) abstützbar ist, dass sie nur mit der Stützflanke (5) berührend an der Felge (2) anliegt.

2. Laufradkomponente (1) nach dem vorhergehenden Anspruch, wobei die Unterseite (23) der Unterlegscheibe (3) wenigstens einen Tragabschnitt (43) aufweist, welcher sich zwischen dem Durchgangsloch (33) und der Stützflanke (5) erstreckt, sodass der Tragabschnitt (43) in einer bestimmungsgemäßen Einbauposition der Unterlegscheibe (3) in einem Laufrad (100) schwebend über dem Felgenboden (12) angeordnet ist.

3. Laufradkomponente (1) nach einem der vorhergehenden Ansprüche, wobei die Stützflanke (5) sphärisch und vorzugsweise konvex gekrümmt ausgebildet ist und wobei die Stützflanke (5) ringförmig geschlossen ausgebildet ist.

4. Laufradkomponente (1) nach einem der vorhergehenden Ansprüche, wobei zwischen der Stützflanke (5) und der Oberseite (13) der Unterlegscheibe (3) wenigstens ein umlaufender und vorzugsweise quer zur Unterseite (23) und/oder Oberseite (13) verlaufender Mantelabschnitt (53) ausgebildet ist und wobei insbesondere an dem Mantelabschnitt (53) wenigstens eine Positionsmarke (63, 73) und vorzugsweise wenigstens eine Nase ausgebildet ist.

5. Laufradkomponente (1) nach einem der vorhergehenden Ansprüche, wobei an der Oberseite (13) auch wenigstens eine Stützflanke (5) ausgebildet ist und/oder wobei an der Oberseite (13) der Unterlegscheibe (3) eine Nippelaufnahme (6) zur Aufnahme eines Auflagebereichs (114) des Speichennippels (104) angeordnet ist und wobei insbesondere die Nippelaufnahme (6) ringförmig geschlossen ausgebildet ist.

6. Laufradkomponente (1) nach dem vorhergehenden Anspruch, wobei die Nippelaufnahme (6) kegelförmig oder sphärisch und vorzugsweise konkav gekrümmt ausgebildet ist.

7. Laufradkomponente (1) nach einem der drei vorhergehenden Ansprüche, wobei die Nippelaufnahme (6) in Bezug zu einem Auflagebereich (114) eines aufnehmbaren Speichennippels (104) mit einer gezielten Geometrieabweichung ausgebildet ist, sodass der Auflagebereich (114) des Speichennippels (104) mit einer Linienberührung an der Nippelaufnahme (6) aufnehmbar ist und wobei insbesondere die Nippelaufnahme (6) eine Krümmung (16) mit einem größeren Radius (26) als eine Krümmung (124) des Auflagebereichs (114) des Speichennippels (104) aufweist.

8. Laufradkomponente (1) nach einem der fünf vorhergehenden Ansprüche, wobei an der Unterseite (23) auch wenigstens eine Nippelaufnahme (6) ausgebildet ist.

9. Laufradkomponente (1) nach einem der sechs vorhergehenden Ansprüche, wobei die Stützflanke (5) in einem flacheren Winkel zu einer Haupterstreckungsebene (17) der Unterlegscheibe (3) als die Nippelaufnahme (6) ausgebildet ist.

10. Laufradkomponente (1) nach einem der vorhergehenden Ansprüche, wobei die Unterlegscheibe (3) wenigstens abschnittsweise in Umfangsrichtung der Felge (2) gekrümmt ausgebildet ist und/oder wobei die Unterlegscheibe (3) länglich ausgebildet ist.

11. Laufradkomponente (1) nach einem der vorhergehenden Ansprüche, wobei die Unterlegscheibe (3) in Bezug auf eine Spiegelebene (7) symmetrisch ausgebildet ist, welche parallel zu einer Haupterstreckungsebene (17) der Unterlegscheibe (3) ist oder welche der Haupterstreckungsebene (17) entspricht.

12. Laufradkomponente (1) nach einem der vorhergehenden Ansprüche, wobei die Unterlegscheibe (3) in Bezug auf eine Spiegelebene (27) symmetrisch ausgebildet ist, welche rechtwinkelig zu einer Haupterstreckungsebene (17) der Unterlegscheibe (3) ist und/oder wobei die Unterlegscheibe (3) rotationssymmetrisch ausgebildet ist.

13. Laufradkomponente (1) nach einem der vorhergehenden Ansprüche, wobei die Unterlegscheibe (3) einen Grundkörper (8) und wenigstens eine abschnittsweise darauf aufgebrachte Beschichtung (3a) aufweist und wobei insbesondere die Beschichtung (3a) wenigstens eine Gleitschicht aus z. B. einem Trockengleitlack umfasst.

14. Unterlegscheibe (3) für eine Laufradkomponente (1) nach einem der vorhergehenden Ansprüche.

15. Laufrad (100) mit wenigstens einer Laufradkomponente (1) nach einem der vorhergehenden Ansprüche.
